# EUROPEAN PATENT SPECIFICATION

(11) **EP 0 719 708 B1**
(45) Date of publication and mention of the grant of the patent: **03.06.1998**
(21) Application number: 94870214.7
(22) Date of filing: 30.12.1994
(51) Int. Cl.: B65D 1/40

(54) **Collapsible scoop**
Klappbare Schöpfkelle
Puisette pliante

(43) Date of publication of application: 03.07.1996
(73) Proprietor: THE PROCTER & GAMBLE COMPANY, Cincinnati, Ohio 45202 (US)
(72) Inventor: Duquet, Jacky Pierre, F-78580 Herbeville (FR); Deflander, Joseph Fernand, B-3150 Wespelaar (BE)
(74) Representative: Canonici, Jean-Jacques

(56) References cited:
- WO-A-92/04236
- US-A- 2 438 434
- US-A- 2 880 902
- US-A- 5 226 551

## Description

### Technical Field

The present invention relates to the technical field of scoops for edible or non-edible powdery or liquid goods. The present invention comprises a first collapsible receptacle (1) which, when collapsed, defines a second receptacle (2) of smaller volume than said first receptacle (1), according to the preamble of claim 1.

### Background

The present invention is a scooping and dosing device which is collapsible to improve its' use and storage. Dosing scoops are often included as an accessory with edible or non-edible powdery or liquid goods such as coffee or detergents. They are often extended as a courtesy to consumers to significantly improve access and handling of said powdery and liquid goods. Scoops thus complement packages of said goods to make them more consumer friendly and thus more appealing. Since scoops are basically given away to consumers, their cost must be kept low, and the technology involved must therefore be relatively inexpensive.

Some non-collapsible scoops ordinarily found on the market are generally impractical for dosing powdery or liquid goods. These non-collapsible scoops always comprise a fixed, non-deformable receptacle of a single volume. Surely, to access and handle packaged goods, non-collapsible scoops remain convenient, but said fixed receptacle constrains consumers to a single volume. Said single volume of receptacle, even when marked with dosing lines, is inconvenient for dosing said powdery and liquid goods. Said single volume often forces consumers to scoop too few or too much powder or liquid than desired. Consumers thus have to put the unnecessary surpluses back into its package. This exercise is time consuming and often encourages waste of goods when consumers are simply reluctant to evaluate, with the help of the dosing lines, the desired volume of powder or liquid.

The present invention, in a single device, provides consumers with receptacles of different volumes. The present invention comprises a receptacle (1) of ordinary volume which is most practical to consumers in need of a relatively large dose of powder or liquid. In this sense, the present invention is comparable to other scoops of the prior art. However, when collapsed, the present invention defines one or several other receptacles (2) & (3) of smaller volume than said first receptacle (1). The collapsed receptacle (2) of the present invention is resilient and stable enough to offer an adequate dosing unit to consumers in need of a smaller volume of powdery or liquid goods. Thus, in a simple and quick hand movement, a scoop of ordinary volume is collapsed into a scoop of smaller volume and inversely to conveniently adapt to the needs of consumers.

Some non-collapsible scoops commonly found on the market are relatively bulky and are thus generally impractical for storage both for consumers and producers. In order to be convenient, scoops must be able to hold a relatively large volume of powder or liquid and must, accordingly, comprise a receptacle of relatively large volume. Because it is irreducible in size, said relatively large volume of the receptacle causes the scoop's overall bulkiness. Said scoop's bulkiness proves to be a major inconvenience in the conception of packages for powdery or liquid goods. Said bulkiness of receptacles automatically leads to a waste of space for the packages that include them. Transportation and storage costs can be significantly driven-up by said waste of space. The desire to reduce storage space of packages is noticeable with the development, over the last several years, of compact packages. Producers have made a continuous and conscious effort to reduce the size of packages for powdery and liquid goods for ecological purposes but also to improve storage at warehouses and for transportation. Bulky scoops, however, somewhat defeat the space-saving advantage of said compact packages.

The present invention helps producers and consumers to better benefit from the use of compact packages. The present invention defines a scoop which is reducible in size and volume and can therefore be attached to or included in compact packages without dramatically increasing the size of said compact packages and without undermining the scoop's functionality or capacity of content. In order to achieve these results, collapsibility is an essential characteristic of the present invention. In another range of examples, the advantages of collapsible scoops are quite noticeable in advertising campaigns. Free-samples given away during such campaigns are generally deprived of bulky scoops. Free-samples' small size compared to samples for sale often makes including bulky scoops impossible. Advertising campaigns for powders or liquids often could not quite make the desired impact on consumers because of said absence of scoops. With the present invention, collapsible scoops can be attached to free-samples so as to improve the overall impact of promotional campaigns on consumers. For instance, the present invention enables the distribution of free-samples with collapsible scoops in mail-boxes.

The document US 2880902 A discloses such a device for scooping which is divided into at least one rigid and one flexible portion. However, another manner in which rigidity and flexibility can be achieved is through the use of different materials.

### Summary of the Invention

The present invention, as defined in claim 1, relates to a device for scooping and dosing, comprising a first receptacle (1) with an opening (8) (i.e., an open receptacle (1)) which is resiliently and stably collapsible. Said first open receptacle (1) defines, when collapsed, at least a second open receptacle (2) of smaller volume than said first open receptacle (1).

### Brief Description of the Figures

Figure I is a side view of one embodiment of the present invention in its non-collapsed position and in its collapsed position.

Figure II is a side view of a second embodiment of the present invention in its non-collapsed position and in its collapsed position.

Figure III is a side view of a third embodiment of the present invention in its non-collapsed position and in its collapsed position.

Figure IV is a cut side-view of the present invention showing the different thickness of portions.

### Description

The present invention is a scooping and dosing device comprising a first receptacle (1) which is resiliently and stably collapsible. The present invention is primarily used to scoop and dose amounts of powders, liquids or other kinds of goods and can include a handle (6) or grip (6) and/or a spout (7) for greater convenience. Said first receptacle (1) comprises an opening (8) and a closed portion (9). The size of said opening (8) may vary widely depending on the molding techniques available to the man of the art. Said opening (8) serves to allow goods to be scooped-in whereas said closed portion (9) serves to contain said goods. In order to collapse said first receptacle (1), consumers simply have to manually push-inwards said closed portion (9) into said portion with an opening (8).

The present invention is resilient in that it can go from one position - whether the collapsed or non-collapsed position - to another (i.e., from non-collapsed position to collapsed position and vice-versa) without suffering from permanent deformation. The first receptacle (1) of the present invention is collapsible from its non-collapsed stable position into a second receptacle (2). Said second receptacle (2) is also stable but is of smaller volume than said first receptacle (1). Whether in its non-collapsed position (first receptacle (1)) or in its collapsed position (second receptacle (2)), the present invention defines a stable structure capable of resisting deformation when used for scooping. This, in turn, insures that the volumes of said non-collapsed and said collapsed position remain unchanged use after use.

The volume of said first receptacle (1) may vary widely, but, generally speaking, it should be able to contain relatively large doses of goods. For instance, in the case of scoops for detergents, in its non-collapsed position, said first receptacle (1) should be able contain enough detergent for at least a full wash load of clothes. So as to indicate the volume of contained goods, said first receptacle (1) and/or said second receptacle (2) may comprise dosing lines. The volume of said second receptacle (2) may also vary widely. In the case of scoops for detergents, said second receptacle (2) could contain three-fourths or half or even a quarter of the volume of detergent necessary for a full wash load of clothes.

The several receptacles of the present invention may be colored differently for consumers to distinguish at a glance between the different volumes of said receptacles.

In one embodiment of the present invention (i.e., Figure III), the top rigid portion (4) could be colored in black whereas the bottom flexible portion could be translucent. Hence the first receptacle (1) could be black at the top and translucent at the bottom and the second receptacle (2) could be all black.

The scooping device of the present invention is divided into at least one rigid (4) and one flexible (5) portion. In one embodiment of the present invention (Figure I), the dosing and scooping device comprises a rigid top portion (4) with an opening (8) and a closed rigid bottom portion (4'') connected by a flexible middle portion (5). When consumers push-inwards said closed rigid bottom portion (4''), said middle flexible portion (5) gives-in to allow said closed bottom rigid portion (4'') to be collapsed into said open top rigid portion (4). Said closed rigid bottom portion (4''), when collapsed into said open first receptacle (1), defines a second receptacle (2) of smaller volume than said first receptacle (1).

In a second embodiment of the present invention (Figure II), the scooping and dosing device comprises an open top rigid portion (4), connected to a middle rigid portion (4') by a first flexible portion (5). Said middle rigid portion (4') is also connected to a closed bottom rigid portion (4'') by a second flexible portion (5'). When collapsed, said first flexible portion (5) gives-in to allow said middle rigid portion (4') to be collapsed into said open top rigid portion (4) and thus defining a second receptacle (2) of smaller volume than said first open receptacle (1). The present invention according to this embodiment can further comprise a third receptacle (3) when said second flexible portion (5') gives-in to allow said closed bottom rigid portion (4'') to be collapsed into said middle rigid portion (4'), itself collapsed into said open top rigid portion (4). Said third receptacle (3) is of smaller volume than said second (2) and first (1) receptacles. In a similar embodiment, and although this is not shown in any of the figures, said last rigid portion (4'') can be connected to, yet, another flexible portion(s) and again to a rigid portion(s) so as to define at least a fourth receptacle. There is no limits to the possible number of receptacles of the present invention other than that set by the means available to the man of the art.

In a third embodiment of the present invention (Figure III), the dosing and scooping device comprises a first receptacle (1) itself comprising a top rigid portion (4) with an opening (8) and a closed bottom flexible portion (5). When consumers push said closed bottom flexible portion (5) inwards, said closed (9) bottom flexible portion (5) is turned inside-out into said open top rigid portion (4) to define a second receptacle (2) of smaller volume than said first receptacle (1). Consumers thus have to turn the present invention around in order to use said second receptacle (2) as a scooping and dosing device.

The manner in which rigidity and flexibility is achieved in the present invention is through the use of different materials. Although this is not a limitation, plastics or resins appear to be the most suitable materials for the present invention. For instance, elastomers, polyethylenes or polypropylenes have the physical characteristics that lend themselves well to the realization of the present invention. They have the advantage of been impermeable to liquids, resistant to shocks and permit flexibility as well as rigidity of the portions. In one embodiment of the present invention, flexible portions (5, 5') can be made of low density polyethylene whereas rigid portions (4, 4', 4'') can be made of high density polyethylene.

Additionally, to the use of different materials, the rigidity of the rigid portions (4, 4', 4'') or flexibility of the flexible portions (5, 5') can be achieved through several means available to the man skilled in the art. For instance, the thickness of the portions (Figure IV) can determine the rigidity of said rigid portions (4, 4', 4'') of the present invention if said thickness is relatively significant. On the contrary, said thickness can determine the flexibility of said flexible portions (5, 5') of the present invention if said thickness is relatively thin. For instance, for scoops of the size generally used for detergents, thickness to achieve flexibility can vary between 0.2 and 0.3 mm. Achieving minimum thickness depends on the state of the art. For the same type of scoops, thickness to achieve rigidity can vary between 1 and 1.5 mm. Generally speaking, the thinner the portions, the more flexible they are.

Casting methods available to the man of the art vary as well. For instance, the bi-injection casting method could be used to produce the desired scoop with portions of different thickness and of different materials. The principal of bi-injection is to inject two different materials (i.e., a flexible material and a rigid material) to make the same scoop. Via bi-injection, a combination of different thickness and different materials used can account for rigid portions (4, 4', 4'') and flexible portions (5, 5'). Although this is not a limitation, one embodiment of the invention made via the use of bi-injection casting could comprise 1 mm-thick rigid portions made of high-density polyethylene and 0.3 mm-thick flexible portions made of low-density polyethylene.

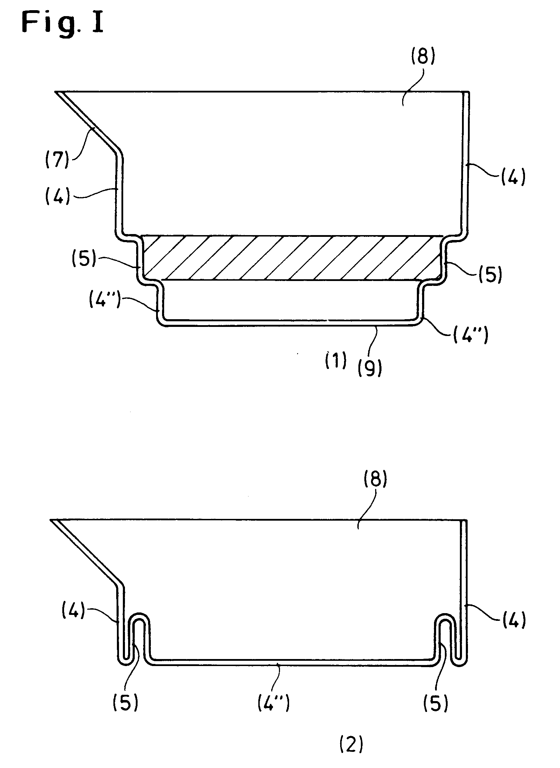

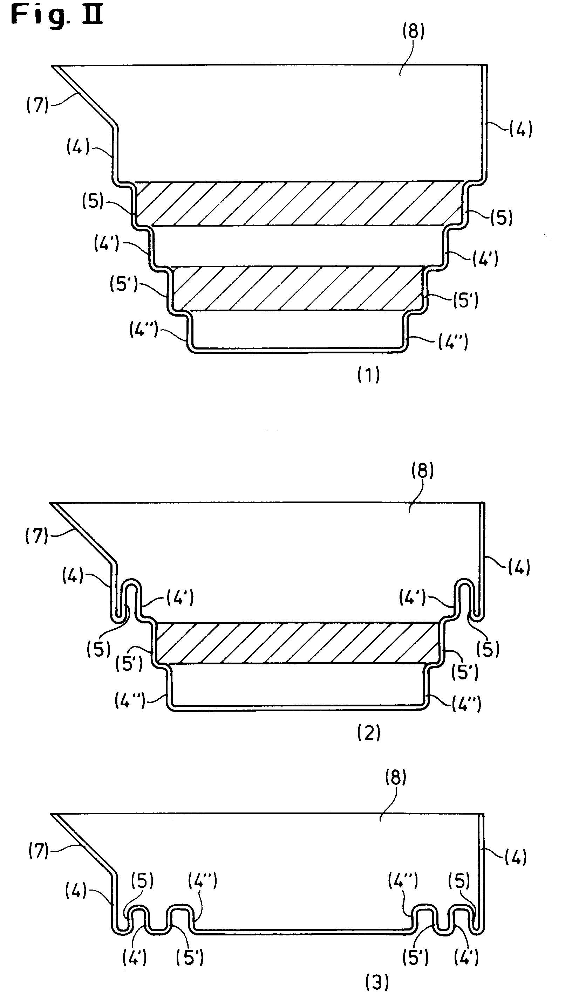

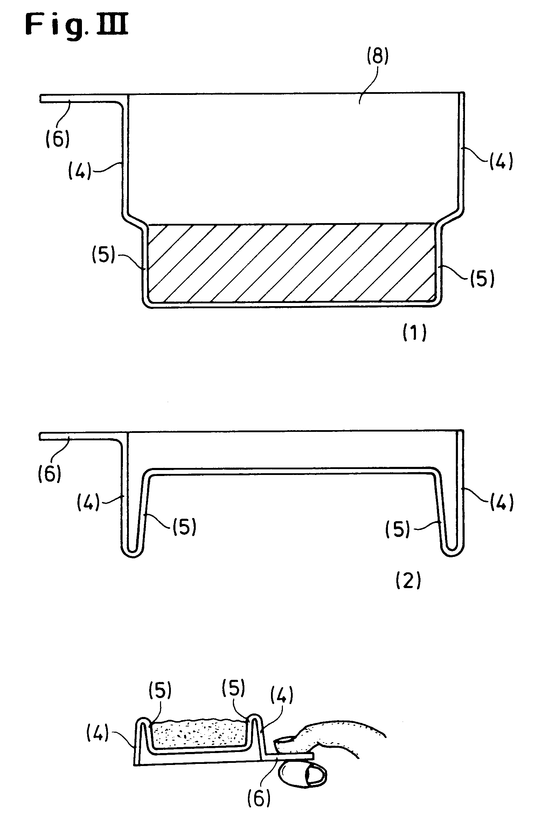

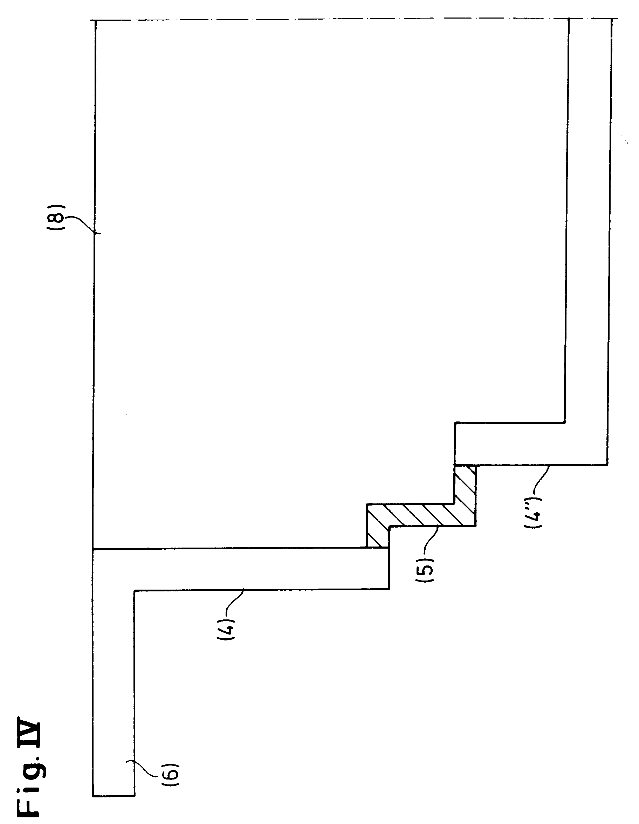

## Claims

1. A device for scooping and dosing, comprising a first receptacle (1) with an opening (8), said first open receptacle (1) is resiliently and stably collapsible, said first open receptacle (1) defining, when collapsed, at least a second open receptacle (2) of smaller volume than said first open receptacle (1), said device comprising one or more rigid portion(s) (4, 4', 4'') and one or more flexible portion(s) (5, 5'), characterised in that said flexible portion(s) (5, 5') and said rigid portion(s) (4, 4', 4'') are made of different materials.

2. A device according to claim 1, wherein said flexible portion(s) (5, 5') are thinner than said rigid portion(s) (4, 4', 4'').

3. A device according to claim 1 or 2 wherein said first receptacle (1) comprises a top portion and a bottom portion which are rigid (4, 4''), and connected by a flexible middle portion (5).

4. A device according to claims 1 through 3 wherein said second open receptacle (2) may be resiliently and stably collapsible, wherein said second receptacle (2) defines, when collapsed, a third receptacle (3) of smaller volume than said second receptacle (2), and said third receptacle (3) may in turn be resiliently and stably collapsible into at least a fourth receptacle.

5. A device according to any of the preceding claims wherein at least one of said receptacles comprises dosing lines.

6. A device according to any of the preceding claims comprising a handle (6) or grip (6).

7. A device according to any of the preceding claims comprising a spout (7).

## Patentansprüche

1. Schöpf- und Dosiervorrichtung, mit einem ersten Behälter (1) mit einer Öffnung (8), durch die der erste, offenen Behälter (1) elastisch und stabil zusammenlegbar ist, welche erste, offene Behälter (1) in zusammengelegter Stellung wenigstens einen zweiten, offenen Behälter (2) kleineren Volumens als der erste offene Behälter (1) bildet, welche Vorrichtung einen oder mehrere steife(n) Bereich(e) (4,4',4'') und einen oder mehrere flexible(n) Bereich(e) (5,5') aufweist, dadurch **gekennzeichnet**, daß der bzw. die flexible(n) Bereich(e) (5,5') und der oder die steife(n) Bereich(e) (4,4',4'') aus unterschiedlichen Materialien bestehen.

2. Vorrichtung nach Anspruch 1, bei der der oder die flexible(n) Bereich(e) (5,5') dünner sind als der oder die steife(n) Bereich(e) (4,4',4'').

3. Vorrichtung nach Anspruch 1 oder 2, bei der der erste Behälter (1) einen oberen Bereich und einen Bodenbereich umfaßt, die steif sind (4,4'') und durch einen flexiblen mittleren Bereich (5) verbunden sind.

4. Vorrichtung nach Anspruch 1 bis 3, bei der der zweite offene Behälter (2) elastisch und stabile zusammenlegbar ist und bei der der zweite Behälter (2) in zusammengelegtem Zustand einen dritten Behälter (3) mit kleinerem Volumen als der zweite Behälter (2) und der dritte Behälter (3) seinerseits elastisch und stabil zu wenigstens einem vierten Behälter zusammenlegbar ist.

5. Vorrichtung nach einem der vorhergehenden Ansprüche, bei der wenigstens einer der Behälter Dosierlinien aufweist.

6. Vorrichtung nach einem der vorhergehenden Ansprüche, mit einem Handgriff (6) oder Griff (6).

7. Vorrichtung nach einem der vorhergehenden Ansprüche, mit einer Gießtülle (7).

## Revendications

1. Dispositif d'écopage et de dosage comprenant un premier récipient (1) présentant une ouverture (8), ledit premier récipient ouvert (1) est repliable de manière élastique et stable, ledit premier récipient ouvert (1) définissant, quand il est replié, au moins un deuxième récipient ouvert (2) de volume plus petit que ledit premier récipient ouvert (1), ledit dispositif comprenant une ou plusieurs parties rigides (4, 4', 4'') et une ou plusieurs parties flexibles (5, 5'), caractérisé en ce que ladite (lesdites) parties flexible(s) (5, 5') et ladite (lesdites) partie(s) rigide(s) (4, 4', 4'') sont faites de matériaux différents.

2. Dispositif selon la revendication 1, dans lequel ladite (lesdites) partie(s) flexible(s) (5, 5') sont plus minces que ladite (lesdites) partie(s) rigide(s) (4, 4', 4'').

3. Dispositif selon la revendication 1 ou 2, dans lequel ledit premier récipient (1) comprend une partie supérieure et une partie inférieure qui sont rigides (4, 4'') et reliées par une partie flexible médiane (5).

4. Dispositif selon les revendications 1 à 3, dans lequel ledit deuxième récipient ouvert (2) peut être repliable de manière élastique et stable, dans lequel ledit deuxième récipient (2) définit, lorsqu'il est replié, un troisième récipient (3) de volume plus petit que ledit deuxième récipient (2), et ledit troisième récipient (3) peut être, à son tour, repliable de manière élastique et stable pour former au moins un quatrième récipient.

5. Dispositif selon l'une quelconque des revendications précédentes, dans lequel au moins un desdits récipients comprend des lignes de dosage.

6. Dispositif selon l'une quelconque des revendications précédentes comprenant un manche (6) ou un élément de préhension (6).

7. Dispositif selon l'une quelconque des revendications précédentes comprenant un bec (7).
